# EUROPEAN PATENT APPLICATION

(11) **EP 4 738 222 A1**
(43) Date of publication of application: **06.05.2026**
(21) Application number: 25211125.7
(22) Date of filing: 24.10.2025
(51) Int. Cl.: G06Q 20/18, G06Q 20/40, G07G 1/00

(54) **PERSONALIZED ACCESSIBILITY FOR SELF-CHECKOUTS**

(30) Priority: 31.10.2024 US 202418933439
(71) Applicant: NCR Voyix Corporation, Atlanta, GA 30308-1007 (US)
(72) Inventor: MORGAN, Kip Oliver, Atlanta, Georgia (US); MASSEY, Jerry Steven, Lawrenceville, Georgia (US); KENNEDY, John, Lawrenceville, Georgia (US); MASON, Timothy Edward, Hoschton, Georgia (US); BENNETT, Gina Torcivia, Lawrenceville, Georgia (US)
(74) Representative: Secerna LLP

(57) **Abstract**

Methods and a system for personalizing accessibility in retail environments use facial recognition to identify customers at self-checkout terminals. Upon recognition, the system retrieves the customer's pre-registered accessibility profile from a cloud-based loyalty solution. This profile contains customized settings for various disabilities and sensitivities. The self-checkout terminal automatically configures its interface based on the retrieved profile, adjusting visual elements, audio features, and other accessibility settings to meet the customer's specific needs. This approach eliminates the need for manual activation of accessibility features, creating a seamless and inclusive shopping experience. The system includes privacy safeguards through an opt-in process and can adapt over time by learning from customer interactions and suggesting additional accessibility settings.

## Description

### Background

Laws regarding accessibility are constantly evolving, with new regulations set to take effect in the near future. Many retailers are working diligently to meet upcoming deadlines and make their customer-facing solutions more compliant with these changing requirements. However, most existing software solutions do not adequately accommodate individuals with diverse abilities. This presents a significant challenge for retailers who aim to provide an equitable and satisfactory experience for all customers. The retail environment often lacks personalized accessibility features, making it difficult for people with different needs to interact effectively with self-service technologies. Additionally, the process of enabling accessibility features is frequently unintuitive, especially for those who would benefit most from them. These issues contribute to a retail experience that is not equitable for all customers, despite most retailers' desire to maximize customer satisfaction across their entire customer base.

### Summary

According to a first aspect of the present invention there is provided a method, comprising: receiving a request from a user to register for at least one personalized self-checkout terminal accessibility feature; presenting a user interface to enable selecting accessibility preferences; receiving a selection of at least one accessibility preference from the user; storing a selected accessibility preference in association with a user profile; receiving a facial image of the user; and associating the facial image with the user profile.

Aptly, wherein presenting further comprises presenting preset templates for various disabilities and sensitivities.

Aptly, wherein presenting further includes presenting predefined templates associated with known sight, sound, and sensory sensibilities.

Aptly, wherein receiving the selection further comprises receiving at least one selection relevant to one or more of a visual interface customization, an audio interface customization, or data input customization.

Aptly, wherein storing further comprises storing metadata associated with configuring a user interface of a self-checkout terminal for the selected accessibility preference to enable customizations for one or more of a data input feature, an audio feature, or a visual feature on the self-checkout terminal.

Aptly, wherein the metadata is stored locally on the self-checkout terminal and/or on a cloud or server.

Aptly, wherein storing further comprises storing metadata local or cloud associated with configuring a user interface of a self-checkout terminal for the selected accessibility preference to enable customizations for one or more of a data input feature, an audio feature, or a visual feature on the self-checkout terminal.

Aptly, wherein associating further includes generating biometric measurements from the facial image and linking the biometric measurements to the user profile.

Aptly, the method further comprises: receiving usage data indicating frequently used accessibility features by the user; and updating the user profile based on the usage data.

Aptly, the method further comprises: obtaining a loyalty identifier for the user; and associating the loyalty identifier with the user profile.

Aptly, the method further comprises: receiving an indication of user consent for facial recognition; and storing the indication of user consent in association with the user profile.

Aptly, the method further comprises: providing an option for the user to enable automatic activation of the selected accessibility preference for future visits to self-checkout terminals.

Aptly, the method further comprises: receiving a candidate facial image associated with the user at a self-checkout terminal; matching the candidate facial image to the user profile; and providing the selected accessibility preference to the self-checkout terminal to enable automatic user interface configuration by the self-checkout terminal during a checkout transaction by the user.

According to a second aspect of the present invention there is provided a method, comprising: capturing a facial image of a user at a terminal for a self-checkout transaction; transmitting the facial image to a cloud-based accessibility personalization service; receiving at least one accessibility preference associated with the facial image from the cloud-based accessibility personalization service; configuring an interface of the terminal based on the at least one accessibility preference; presenting a configured interface on the terminal to enable the user to conduct the self-checkout transaction with the at least one accessibility preference; and processing the self-checkout transaction for the user on the terminal using the configured interface.

Aptly, wherein capturing further comprises using one or more of a camera, a light detection and ranging (Lidar) sensor, or an infrared (IR) sensor.

Aptly, wherein configuring further comprises adjusting, in the configured interface, one or more of visual elements, audio features, or data input features based on the at least one accessibility preference.

Aptly, the method further comprises: presenting an opt-in prompt for facial recognition before capturing the facial image.

Aptly, the method further comprises: transmitting usage data indicating usage of particular accessibility features by the user during the self-checkout transaction to the cloud-based accessibility personalization service.

Aptly, the method further comprises: receiving a loyalty identifier associated with the user from the cloud-based accessibility personalization service; and applying the loyalty identifier to the self-checkout transaction.

Aptly, the method further comprises: reverting the interface to default settings after the self-checkout transaction completes.

According to a third aspect of the present invention there is provided a system, comprising: at least one cloud or server comprising at least one processor and a memory, the memory storing instructions representing a cloud-based accessibility personalization service, the instructions when executed by the at least one processor, cause the at least one cloud or server to:
receive a request from a user to register for personalized self-checkout terminal accessibility features;
present a user interface for selecting at least one accessibility preference;
receive at least one selection of accessibility preferences from the user;
store a selected accessibility preference in association with a user profile;
receive a facial image of the user;
associate the facial image with the user profile;
receive a candidate facial image from a terminal;
identify the user profile associated with the candidate facial image; and
transmit the selected accessibility preference associated with the user profile to the terminal; and
a terminal comprising at least one processor and a memory, the memory storing instructions that, when executed by the at least one processor, cause the terminal to:
   capture the candidate facial image of a user;
   transmit the candidate facial image to the cloud-based accessibility personalization service;
   receive the selected accessibility preference from the cloud-based accessibility personalization service;
   configure an interface of the terminal based on the selected accessibility preference;
   present a configured interface to the user; and
   process a self-service transaction for the user using the configured interface.

Aptly, wherein the cloud-based accessibility personalization service is further configured to: receive usage data from the terminal indicating particular accessibility features used during the self-service transaction, and update the user profile based on the usage data.

### Brief Description of the Drawings

FIG. 1 is a diagram of a system for personalized accessibility during self-checkouts, according to an example embodiment.
FIG. 2 is a flow diagram of a method for personalizing self-checkouts for accessibility, according to an example embodiment.
FIG. 3 is a flow diagram of another method for personalizing self-checkouts for accessibility, according to an example embodiment.

### Detailed Description

The problem of accessibility in retail environments is multifaceted and increasingly urgent. Most software solutions do not adequately accommodate people with different abilities, contributing to widespread ableism. The complexity of disability laws, which vary by location, countries, and regions, further complicates the issue. Enabling accessibility features is often unintuitive, especially for those who would benefit most from them. This challenge is particularly acute for touch-screen kiosks, which can be inaccessible for people with mobility challenges. The retail experience is consequently inequitable, despite retailers' desire to maximize customer satisfaction across their entire customer base.

The problem is exacerbated by the constant evolution of accessibility laws, with new regulations set to take effect in the near future. Many retailers are working diligently to meet upcoming deadlines and make their customer-facing solutions more compliant. However, the task is complicated by the fact that each person might have different accommodation needs. Moreover, the post-COVID era has seen an increase in the number of people with limited abilities, adding urgency to the need for accessible retail solutions.

Discriminating against disabled people is illegal in some countries, yet the lack of accessible retail technologies effectively creates a form of discrimination. This not only impacts customer satisfaction but also exposes retailers to potential legal risks. The challenge, therefore, is to create a retail environment that is truly inclusive and accommodating to all customers, regardless of their abilities or needs.

The embodiments described herein address these problems through a novel approach to personalized accessibility in retail environments. By leveraging cloud-based loyalty solutions, the system herein stores data for a person's accessibility needs. This allows for a highly personalized experience that can accommodate a wide range of abilities and preferences.

One feature presented herein includes the use of facial recognition technology. When a customer approaches a self-checkout machine, their face can be recognized and matched to their loyalty identifier associated with their loyalty account. This enables the system to automatically retrieve and apply the customer's accessibility preferences without requiring any manual input. The opt-in nature of this feature ensures privacy and consent, allowing customers to choose whether they want to use this automated system.

Embodiments presented herein also address the problem of unintuitive accessibility features by automating the process. Once a customer's preferences are stored in the system, the self-checkout software can automatically activate the relevant features that best accommodate the user's needs. This eliminates the need for customers to navigate potentially complex menus or settings each time they use a self-service kiosk.

Furthermore, the system's ability to learn from customer interactions and suggest additional accessibility settings based on frequently used features allows for continuous improvement of the user experience. This adaptive approach ensures that the solution can evolve to meet changing needs and preferences over time.

By providing a seamless, personalized accessibility experience, these embodiments help create a more equitable retail environment. They enable retailers to better serve customers with diverse needs, comply with evolving accessibility laws, and potentially reduce legal risks associated with discrimination. Moreover, by improving the shopping experience for all customers, retailers can enhance overall customer satisfaction and loyalty.

As used herein a "user" and a "customer" may be used interchangeably and synonymously. This is an individual who registers for personalized accessibility during self-checkouts at self-checkout terminals.

As used herein "terminal" and "self-checkout terminal" may be used interchangeably and synonymously. A customer performs a self-checkout via a self-checkout terminal or terminal.

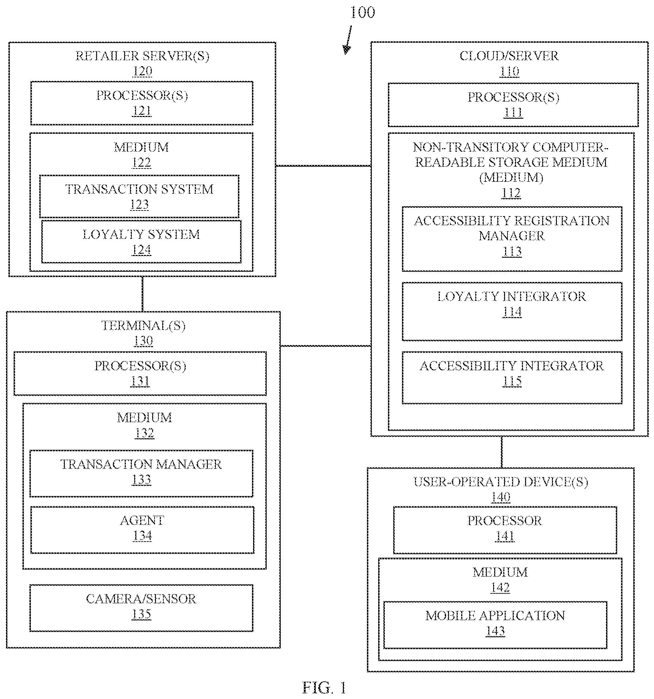

FIG. 1 is a diagram of a system 100 for personalized accessibility during self-checkouts, according to an example embodiment. Notably, the components are shown schematically in greatly simplified form, with only those components relevant to understanding of the embodiments being illustrated.

Furthermore, the various components (that are identified in system/platform 100) are illustrated and the arrangement of the components are presented for purposes of illustration only. It is to be noted that other arrangements with more or less components are possible without departing from the teachings of self-checkout personalized accessibility, presented herein and below.

System 100 includes a cloud 110 or server, one or more retailer servers 120, one or more terminals 130, and one or more user-operated devices 140. Cloud 110 includes at least one processor 111 and a non-transitory computer-readable storage medium 112 (medium), which includes instructions for an accessibility registration manager 113, a loyalty integrator 114, and an accessibility integrator 115. The instructions when executed by the processor 111 cause the processor 111 to perform operations discussed herein and below with respect to accessibility registration manager 113, loyalty integrator 114, and accessibility integrator 115.

Each retail server 120 includes at least one processor 121 and a medium 122, which includes instructions for a transaction system 123 and a loyalty system 124. The instructions when executed by the processor 121 cause the processor 121 to perform the operations discussed herein and below with respect to transaction system 123 and loyalty system 124.

Each terminal 130 includes at least one processor 131 and a medium 132, which includes instructions for a transaction manager 133 and an agent 134. The instructions when executed by the processor 131 cause the processor 131 to perform the operations discussed herein and below with respect to transaction manager 133 and agent 134. Each terminal 130 also includes one or more cameras and/or sensors 135, which include a light detection and ranging (Lidar) sensor and/or infrared (IR) sensor.

Each user-operated device 140 includes at least one processor 141 and a medium 142, which includes instructions for a mobile application 143. The instructions when executed by the processor 141 cause the processor 141 to perform operations discussed herein and below with respect to mobile application 143.

Initially, a customer, who has a disability or sensibility relevant to sights, sounds, and/or input access, visits a terminal 130 for self-checkouts. The customer has already registered for customized and personalized accommodations during self-checkouts at terminals 130. During registration, the user interacts with mobile application 143 on user-operated device 140. Mobile application 143 interacts with accessibility registration manager 113 to establish an accessibility user profile for the user linked to the user's loyalty accounts associated with loyalty systems 124 of retailers.

In an embodiment, accessibility registration manager 113 stores a registered accessibility user profile in a loyalty record associated with the customer's loyalty account in a corresponding loyalty system 124. In an embodiment, the accessibility registration manager 113 maintains the registered accessibility user profile and links the registered accessibility user profile to the customer's loyalty account in a corresponding loyalty system 124.

The accessibility registration manager 113 presents a user interface (UI) through mobile application 143 during the registration system. The UI presents a series of questions for the customer to select that identifies the customer's disabilities or sensibilities. The UI also presents specific accessibility features desired by the customer for customer selection.

By way of example only, the accessibility features presented for customer selection within the UI include high contrast, on-screen magnifier, universal navigation, zoomed text, red-green-blue color blindness, blue-yellow color blindness, monochromacy, audio, etc. Each selected accessibility feature is associated with a predefined accessibility template or theme that corresponds to specific configuration settings needed by a terminal 130 to provide the selected accessibility features on the terminal 130 during a self-checkout by the customer.

The specific configuration settings are stored or are dynamically mapped to a common data structure and format that can be recognized by either transaction manager 133 or agent 134. In a case where transaction manager 133 is unable to translate the common data structure into the specific configuration settings, the agent 134 translates the common data structure format into a specific application programming interface (API) set of commands that transaction manager 133 recognizes and processes to enable the customer's selected accessibility features. In an embodiment, the common data structure format is XML or JSON.

Either before the customer selects their desired accessibility features via the UI of accessibility registration manager 113 or after the customer selects the desired accessibility features, the customer registers a facial image with a loyalty identifier to a customer's loyalty account, Accessibility registration manager 113 provides the facial image and loyalty identifier to loyalty integrator 114, which identifies the customer's loyalty account with the appropriate loyalty system 124. Loyalty integrator 114 calculates measurements from facial features depicted in the facial image and, optionally, a score associated with the measurements.

In an embodiment, the loyalty integrator 114 interacts with the loyalty system to store the facial or biometric measurements or score in a loyalty record associated with the customer's loyalty account with the loyalty system 124. In an embodiment, the loyalty integrator 114 maintains a mapping between the registered customer's loyalty identifier and the facial or biometric measurements or score.

In an embodiment, a third-party service provides a loyalty identifier for the customer based on the customer-provided facial image. In such an embodiment, loyalty integrator 114 uses the provided loyalty identifier to locate the customer's loyalty account with the appropriate loyalty system as needed during operation of system 100.

Once the customer is registered for personalized accessibility features, the customer subsequently appears at a terminal 130 for a self-checkout. A transaction UI of transaction manager 133 presents an initial welcome, attract, and/or splash screen for the customer to initiate a transaction on the terminal 130, the splash screen is enhanced to include an accessibility option for the customer to select to begin a transaction. A next screen of the transaction UI asks for customer permission to take a photo or image of the customer's face a further option may permit the customer to bypass this requirement in the customer's future self-service transactions.

After customer authorizations are received, a camera, Lidar sensor, and/or IR sensor 135 provides either transaction manager 133 or agent 134 an image of the customer's face. The image is either sent to accessibility integrator 115 or sent to a third-party loyalty integrator service for retrieval of the customer's loyalty identifier. In a case, where the third-party loyalty integrator service is used for the loyalty identifier, transaction manager 133 or agent 134 sends the loyalty identifier to accessibility integrator 115. In a case, where the transaction manager 133 or agent 134 sends the facial image of the customer to the accessibility integrator 115, accessibility integrator provides the facial image to loyalty integrator which calculates facial or biometric measurements or a score for the calculated measurements and locates the customer's loyalty identifier and loyalty account with the appropriate loyalty system.

Once the customer's loyalty account is identified, accessibility integrator 115 retrieves the customer selected accessibility features. The accessibility integrator 115 sends the transaction UI configuration settings associated with the accessibility features to transaction manager 133 or agent 134. The transaction manager 133 identifies the transaction UI configuration settings as commands to configure the transaction UI with the specific settings. The transaction manager 133 processes the commands and the customer's self-service or self-checkout transaction at terminal initiates, processes, and concludes with the accessibility features provided during the length of the self-service transaction. After the self-service transaction concludes, transaction manager 133 reverts back to default transaction UI settings.

In an embodiment, agent 134 tracks accessibility feature changes and usage during self-service transaction by the customer. Agent 134 reports the feature changes and usage back to accessibility integrator 115 upon conclusion of each customer self-service transaction. Accessibility integrator 115 sends a push notification to the customer, via mobile application 143, that suggest changes or additional accessibility features for the customer based on the changes and usage. When the customer confirms a suggested modification via the UI of the mobile application 143, accessibility integrator 115 interacts with loyalty integrator to update the customer's accessibility user profile and optionally store the changes in a record associated with the customer's loyalty account.

In an embodiment, the customer opts-in and provides consent for facial recognition each time the customer visits a store before a self-service transaction begins. In an embodiment, the customer provides consent at a first store in a retail chain and that first consent of the customer permits the customer to avoid having to affirmatively provide consent at other stores associated with the retail chain; this assumes that the request for consent explains this to the customer before the consent is received by the customer.

In an embodiment, the terminal 130 is an SST, which is a kiosk that the customer uses to order food in a restaurant. That is the store can be a restaurant and does not have to be a store selling goods or services. In this way, the customer has their personalized accessibility features applied when ordering food at restaurants via a kiosk.

In an embodiment, system 100 provides non-accessibility related UI customizations defined by a customer for self-service transactions at SSTs 130. For example, a customer register to have the UI present an inspirational quote displayed/or printed on their receipt when the checkout on the SST 130. In such a case, system 100 utilizes and API to obtain the inspirational quote and provide the quote to the transaction manager 133 or the agent 134 of the SST for presentation and or printing during checkout.

In an embodiment, a customer lacks a loyalty account with a given store. The customer may desire privacy and may lack loyalty accounts with any store. In such a case, registered customer personalization features can still be integrated into the self-checkouts of the customer by accessibility integrator 115 and/or loyalty integrator 114 maintaining the user's profile for accessibility features independent of any loyalty account. This permits customers with accessibility needs to benefit from the features of system 100 without actually having or wanting to use a loyalty account.

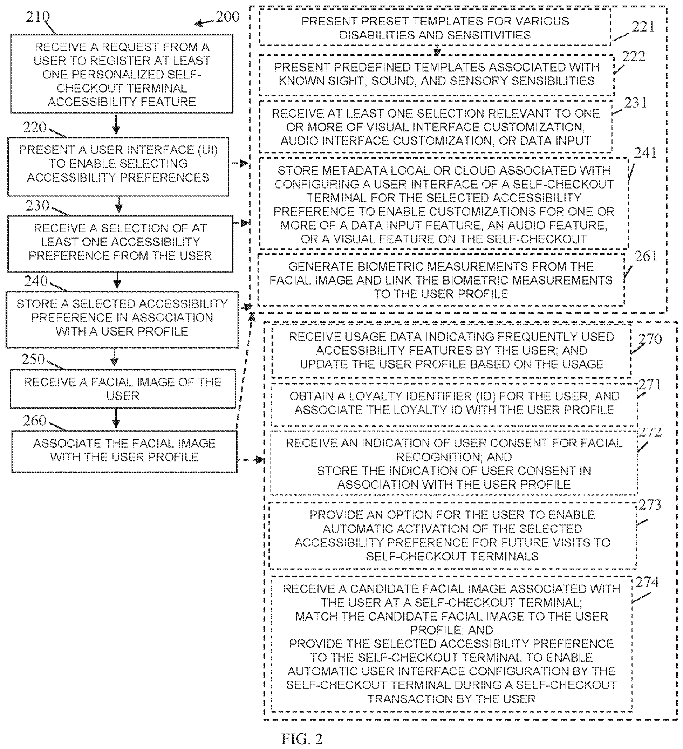

The above-referenced embodiments and other embodiments are now discussed within FIGS. 2-3. FIG. 2 is a flow diagram of a method 200 for personalizing self-checkouts for accessibility, according to an example embodiment. The software module(s) that implements the method 200 is referred to as a "cloud-based self-checkout personalized accessibility service." The cloud-based self-checkout personalized accessibility service is implemented as executable instructions programmed and residing within memory and/or a non-transitory computer-readable (processor-readable) storage medium and executed by one or more processors of one or more devices. The processor(s) of the device that executes the cloud-based self-checkout personalized accessibility service are specifically configured and programmed to process the cloud-based self-checkout personalized accessibility service. The cloud-based self-checkout personalized accessibility service may have access to one or more network connections during its processing. The network connections can be wired, wireless, or a combination of wired and wireless.

In an embodiment, the device that executes the cloud-based self-checkout personalized accessibility service is cloud 110. In an embodiment, the device that execute the cloud-based self-checkout personalized accessibility service is retailer server 120. In an embodiment, the cloud-based self-checkout personalized accessibility service is all or some combination of accessibility registration manager 113, loyalty integrator 114, and accessibility integrator 115.

At 210, the cloud-based self-checkout personalized accessibility service receives a request from a user to register at least one personalized self-checkout terminal accessibility feature. The personalized self-checkout terminal accessibility features include, by way of example, only high contrast, on-screen magnifier, universal navigation input device or touchscreen widget, zoomed text, red-green-blue color blindness, blue-yellow color blindness, monochromacy, audio, etc.

At 220, the cloud-based self-checkout personalized accessibility service presents a UI to enable selecting accessibility preferences or features. In an embodiment, at 221, the cloud-based self-checkout personalized accessibility service presents preset templates for various disabilities, sensitivities, and/or sensibilities. In an embodiment of 221 and at 222, the cloud-based self-checkout personalized accessibility service presents predefined templates associated with known sight, sound, and sensory sensibilities.

At 230, the cloud-based self-checkout personalized accessibility service receives a selection of at least one accessibility preference from the user. In an embodiment, at 231, the cloud-based self-checkout personalized accessibility service receives at least one selection relevant to one or more of visual interface customization, audio interface customization or data input customization.

At 240, the cloud-based self-checkout personalized accessibility service stores a selected accessibility preference in association with a user profile. In an embodiment, at 241, the cloud-based self-checkout personalized accessibility service stores metadata local or cloud associated with the configuring a user interface of a self-checkout terminal 130 for the selected accessibility preference to enable customizations for one or more of a data input feature, an audio feature, or a visual feature on the self-checkout terminal 130.

At 250, the cloud-based self-checkout personalized accessibility service receives a facial image of the user. At 260, the cloud-based self-checkout personalized accessibility service associates the facial image with the user profile. In an embodiment, at 261, the cloud-based self-checkout personalized accessibility service generates biometric measurements from the facial image and links the biometric measurements to the user profile; the received facial image is then removed from storage or memory.

In an embodiment, at 270, the cloud-based self-checkout personalized accessibility service receives usage data indicating frequently used accessibility features by the user. The cloud-based self-checkout personalized accessibility service updates the user profile based on the usage and when the user confirms that the modification via a mobile application 143 responsive to a push notification sent by the cloud-based self-checkout personalized accessibility service regarding the modification.

In an embodiment, at 271, the cloud-based self-checkout personalized accessibility service obtains a loyalty identifier for the user. The cloud-based self-checkout personalized accessibility service associates the loyalty identifier with the user profile.

In an embodiment, at 272, the cloud-based self-checkout personalized accessibility service receives an indication of user consent for facial recognition. The cloud-based self-checkout personalized accessibility service stores the indication of user consent in association with the user profile.

In an embodiment, at 273, the cloud-based self-checkout personalized accessibility service provides an option for the user to enable automatic activation of the selected accessible preference for future visits to self-checkout terminals. This ensures that the user does not have to continually consent in subsequent self-service transaction to the facial recognition.

In an embodiment, at 274, the cloud-based self-checkout personalized accessibility service receives a candidate facial image associated with the user at a self-checkout terminal 130. The cloud-based self-checkout personalized accessibility service matches the candidate facial image to the user profile. The cloud-based self-checkout personalized accessibility service provides the selected accessibility preference to the self-checkout terminal 130 to enable automatic UI configuration by the self-checkout terminal 130 during a self-checkout transaction by the user.

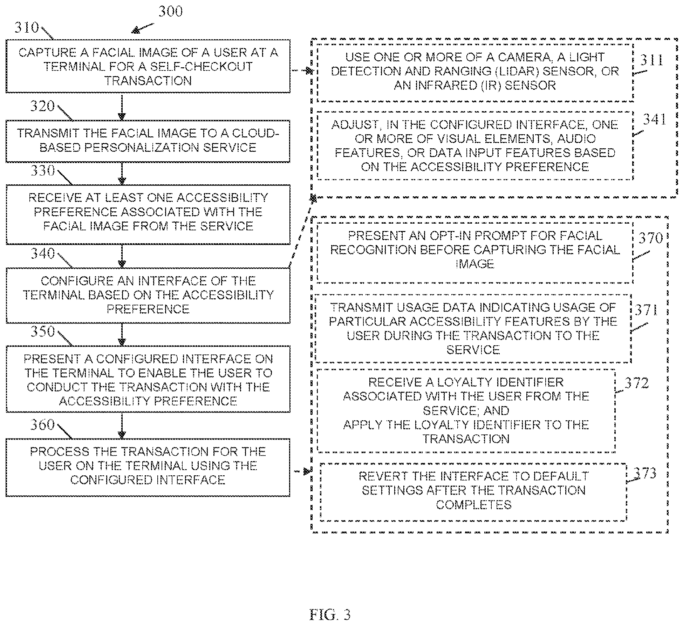

FIG. 3 is a diagram of another method 300 for personalizing self-checkouts for accessibility according to an example embodiment. The software module(s) that implements the method 300 is referred to as a "self-checkout accessibility personalization manager." The checkout accessibility personalization manager is implemented as executable instructions programmed and residing within memory and/or a non-transitory computer-readable (processor-readable) storage medium and executed by one or more processors of a device. The processors that execute the checkout accessibility personalization manager are specifically configured and programmed for processing the checkout accessibility personalization manager. The checkout accessibility personalization manager may have access to one or more network connections during its processing. The network connections can be wired, wireless, or a combination of wired and wireless.

In an embodiment, the device that executes the checkout accessibility personalization manager is terminal 130. In an embodiment, checkout accessibility personalization manager is all or some combination of transaction manager 133 and agent 134. The checkout accessibility personalization manager interacts with method 200 of FIG. 2. The checkout accessibility personalization manager also interacts with transaction system 123 and/or loyalty system 124 of retailer server 120.

At 310, the checkout accessibility personalization manager captures a facial image of a user at a terminal 130 for a self-checkout transaction. In an embodiment, at 311, the checkout accessibility personalization manager uses one or more a camera, a lidar sensor, or an IR sensor 135 to obtain the facial image of the user at the terminal 130.

At 320, the checkout accessibility personalization manager transmits the facial image to a cloud-based personalization service. In an embodiment, the cloud-based personalization service is method 200 of FIG. 2.

At 330, the checkout accessibility personalization manager receives at least one accessibility preference or feature associated with the facial image from the cloud-based personalization service. At 340, the checkout accessibility personalization manager configures an UI of the terminal 130 based on the accessibility preference or feature. In an embodiment, at 341, the checkout accessibility personalization manager adjusts, within the configured UI, one or more of visual elements, audio features, or input data features based on the accessibility preference.

At 350, the checkout accessibility personalization manager presents a configured UI on the terminal 130 to enable the user to conduct the self-checkout terminal with the accessibility preference. At 360, the checkout accessibility personalization manager processes the self-checkout transaction for the user on the terminal 130 using the configured UI.

In an embodiment, at 370, the checkout accessibility personalization manager presents an opt-in prompt for facial recognition before capturing the facial image. In an embodiment, at 371, the checkout accessibility personalization manager transmits usage data indicating usage of particular accessibility features by the user during the self-checkout transaction to the cloud-based personalization service.

In an embodiment, at 372, the checkout accessibility personalization manager receives a loyalty identifier associated with the user from the cloud-based personalization service and applies the loyalty identifier to the self-checkout transaction. In an embodiment, at 373, the checkout accessibility personalization manager reverts the UI to default settings after the transaction completes.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
receiving a request from a user to register for at least one personalized self-checkout terminal accessibility feature;
presenting a user interface to enable selecting accessibility preferences;
receiving a selection of at least one accessibility preference from the user;
storing a selected accessibility preference in association with a user profile;
receiving a facial image of the user; and
associating the facial image with the user profile.

2. The method of claim 1, wherein presenting further comprises presenting preset templates for various disabilities and sensitivities.

3. The method of claim 1 or claim 2, wherein presenting further includes presenting predefined templates associated with known sight, sound, and sensory sensibilities.

4. The method of any preceding claim, wherein receiving the selection further comprises receiving at least one selection relevant to one or more of a visual interface customization, an audio interface customization, or data input customization; and/or wherein storing further comprises storing metadata local or cloud associated with configuring a user interface of a self-checkout terminal for the selected accessibility preference to enable customizations for one or more of a data input feature, an audio feature, or a visual feature on the self-checkout terminal.

5. The method of any preceding claim, wherein associating further includes generating biometric measurements from the facial image and linking the biometric measurements to the user profile; and/or the method further comprises:
receiving usage data indicating frequently used accessibility features by the user; and
updating the user profile based on the usage data.

6. The method of any preceding claim, further comprising:
obtaining a loyalty identifier for the user; and
associating the loyalty identifier with the user profile.

7. The method of any preceding claim, further comprising:
receiving an indication of user consent for facial recognition; and
storing the indication of user consent in association with the user profile; and/or further comprising:
providing an option for the user to enable automatic activation of the selected accessibility preference for future visits to self-checkout terminals.

8. The method of any preceding claim, further comprising:
receiving a candidate facial image associated with the user at a self-checkout terminal;
matching the candidate facial image to the user profile; and
providing the selected accessibility preference to the self-checkout terminal to enable automatic user interface configuration by the self-checkout terminal during a checkout transaction by the user.

9. A method, comprising:
capturing a facial image of a user at a terminal for a self-checkout transaction;
transmitting the facial image to a cloud-based accessibility personalization service;
receiving at least one accessibility preference associated with the facial image from the cloud-based accessibility personalization service;
configuring an interface of the terminal based on the at least one accessibility preference;
presenting a configured interface on the terminal to enable the user to conduct the self-checkout transaction with the at least one accessibility preference; and
processing the self-checkout transaction for the user on the terminal using the configured interface.

10. The method of claim 9, wherein capturing further comprises using one or more of a camera, a light detection and ranging (Lidar) sensor, or an infrared (IR) sensor.

11. The method of claim 9 or claim 10, wherein configuring further comprises adjusting, in the configured interface, one or more of visual elements, audio features, or data input features based on the at least one accessibility preference.

12. The method of any of claims 9 to 11, further comprising:
presenting an opt-in prompt for facial recognition before capturing the facial image; and/or further comprising:
transmitting usage data indicating usage of particular accessibility features by the user during the self-checkout transaction to the cloud-based accessibility personalization service.

13. The method of any of claims 9 to 12, further comprising:
receiving a loyalty identifier associated with the user from the cloud-based accessibility personalization service; and
applying the loyalty identifier to the self-checkout transaction; and/or further comprising:
reverting the interface to default settings after the self-checkout transaction completes.

14. A system, comprising:
at least one cloud or server comprising at least one processor and a memory, the memory storing instructions representing a cloud-based accessibility personalization service, the instructions when executed by the at least one processor, cause the at least one cloud or server to:
receive a request from a user to register for personalized self-checkout terminal accessibility features;
present a user interface for selecting at least one accessibility preference;
receive at least one selection of accessibility preferences from the user;
store a selected accessibility preference in association with a user profile;
receive a facial image of the user;
associate the facial image with the user profile;
receive a candidate facial image from a terminal;
identify the user profile associated with the candidate facial image; and
transmit the selected accessibility preference associated with the user profile to the terminal; and
a terminal comprising at least one processor and a memory, the memory storing instructions that, when executed by the at least one processor, cause the terminal to:
capture the candidate facial image of a user;
transmit the candidate facial image to the cloud-based accessibility personalization service;
receive the selected accessibility preference from the cloud-based accessibility personalization service;
configure an interface of the terminal based on the selected accessibility preference;
present a configured interface to the user; and
process a self-service transaction for the user using the configured interface.

15. The system of claim 14, wherein the cloud-based accessibility personalization service is further configured to:
receive usage data from the terminal indicating particular accessibility features used during the self-service transaction, and
update the user profile based on the usage data.
